(19) Europäisches Patentamt
European Patent Office
Office européen des brevets

(11) **EP 4 368 574 A1**

(12) # EUROPEAN PATENT APPLICATION
published in accordance with Art. 153(4) EPC

(43) Date of publication:
**15.05.2024 Bulletin 2024/20**

(21) Application number: **22837916.0**

(22) Date of filing: **04.07.2022**

(51) International Patent Classification (IPC):
**C01D 15/04** (2006.01)     **C01D 3/02** (2006.01)
**H01M 10/54** (2006.01)

(52) Cooperative Patent Classification (CPC):
**C01D 3/02; C01D 15/04; H01M 10/54;** Y02P 10/20;
Y02W 30/84

(86) International application number:
**PCT/KR2022/009621**

(87) International publication number:
**WO 2023/282564 (12.01.2023 Gazette 2023/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.07.2021 KR 20210088260**

(71) Applicant: **KOREA INSTITUTE OF GEOSCIENCE
AND
MINERAL RESOURCES**
**Yuseong-gu**
**Daejeon 34132 (KR)**

(72) Inventors:
• **RYU, Taegong**
**Daejeon 34090 (KR)**
• **SHIN, Junho**
**Daejeon 35359 (KR)**
• **JEONG, Jae-Min**
**Daejeon 34120 (KR)**

(74) Representative: **Witte, Weller & Partner**
**Patentanwälte mbB**
**Postfach 10 54 62**
**70047 Stuttgart (DE)**

(54) **HIGH VALUE-ADDED METHOD FOR RESOURCE RECOVERY FROM LITHIUM SLUDGE AND FLUORIDE SLUDGE**

(57) The present invention provides a high value-added method for resource recovery from lithium sludge and fluoride sludge, and an economic sludge treatment method, wherein lithium fluoride (LiF), which is an insoluble lithium compound, is prepared by reacting lithium sludge with fluoride sludge, and then Li-Al layered double hydroxide (LI-Al LDH), which is an insoluble lithium compound, is prepared by reacting reaction filtrate with an aluminum compound, after which a conversion product is prepared by a sulfation reaction of the Li-Al layered double hydroxide (LI-Al LDH), which is an insoluble lithium compound, with a sulfuric acid compound, a lithium concentrate is prepared by leaching the conver-sion product with water, and then the lithium concentrate is recirculated as a lithium raw material to efficiently and economically recover lithium ions contained in the lithium sludge, or lithium fluoride (LiF) is prepared, and then lithium ions and fluoride ions are economically recovered from lithium sludge and fluoride sludge via additional precipitation/separation of lithium fluoride through the mechanical vapor recompression (MVR) of the reaction filtrate, and trace amounts of fluoride ions contained in the filtrate are reacted with a calcium compound to separate the filtrate into calcium fluoride precipitate and residual process water and discharge a small amount thereof.

**(Cont. next page)**

[FIG. 1]

**Description**

[Technical Field]

The present disclosure relates to a high value-added method for resource recovery from lithium sludge and fluoride sludge, comprising preparing lithium fluoride from lithium sludge generated in the process of manufacturing lithium secondary batteries or recycling lithium secondary batteries after use, and from fluoride sludge generated in the process of manufacturing semiconductors, and performing a resource recovery process which significantly reduces the amount of waste from calcium fluoride precipitates and residual process water.

[Background Art]

The demand for lithium secondary batteries (LIB) is rapidly increasing due to the rapid growth of the mid-to-large battery market for electric vehicles and energy storage systems (ESS).

In addition to this rapid increase in demand for high-capacity batteries, the demand for cathode materials for NCM and NCA series is increasing significantly, as compared to the existing LCO, LMO, and LFP series.

Unlike existing cathode materials that use lithium carbonate as a raw material, NCA and NCM series cathode materials are manufactured by using lithium hydroxide. When mixed with NCA and NCM precursors and fired to improve the high-capacity performance of lithium secondary batteries, excessive amounts of lithium hydroxide are used.

Because of this, unreacted lithium compounds remain in the cathode material powder after manufacturing the cathode materials, which requires a subsequent process to remove the excessive amounts of lithium components through a water washing process of the cathode materials.

Further, the concentration of lithium ions contained in the wastewater generated after water washing the cathode material is approximately 1,000 to 2,000 ppm (mg/L). Although the wastewater is a high-quality lithium raw material, the entire amount is currently being treated as wastewater due to the lack of economical extraction technology.

Further, attempts to recover valuable metals (e.g., lithium, cobalt, nickel and manganese) from waste lithium secondary batteries generated after use are actively underway. Cobalt, nickel, manganese, etc. may be efficiently separated and recovered by applying solvent extraction. Although lithium is emitted at a concentration of over 3,000 ppm, there is a lack of economic separation technology therefor, and, thus, technology to overcome this is required to be developed.

In addition to the rapid increase in demand for mid- to large-capacity lithium secondary batteries, rapid increase in the amount of lithium sludge generated in the process of manufacturing lithium secondary batteries or recycling lithium secondary batteries after use is also expected, and the development of economical recycling technology is urgently needed.

Further, with the development of the information and communication industry, the demand for electronic devices using various semiconductor devices, liquid crystal displays (LCDs) and electroluminescent displays (LEDs) is increasing. Accordingly, the demand for hydrofluoric acid solution as an etching solution for wafers and circuit boards is also increasing.

Wastewater generated in the semiconductor industry is discharged as organic wastewater, nitrogen wastewater, hydrofluoric acid wastewater, and acid/alkaline wastewater, and hydrofluoric acid wastewater generally accounts for 60 to 70% of the generated wastewater.

As of 2018, domestic semiconductor processes generate 596 m$^3$ of wastewater per day, and approximately 15,000 tons of hydrofluoric acid wastewater is discharged annually.

Further, considering the growth potential and competitiveness of the semiconductor industry, it is expected that more than twice the current amount of hydrofluoric acid wastewater will be generated within the next five years, and preparation measures therefor are required.

In the case of sludge (e.g., hydrofluoric acid, fluoride-based) generated in the semiconductor industry, additional economic and environmental cost problems are highlighted due to the problem of treatment costs and solid waste generated after treatment, but solutions are still insufficient.

This is ultimately causing a weakening of corporate competitiveness in the IT industry, and interest in fluoride waste treatment technology is also increasing.

To date, neutralization using slaked lime (calcium hydroxide, $Ca(OH)_2$) has been applied as a method for treating waste hydrofluoric acid and fluoride solutions. Although the fluoride ion in the sludge is reduced to a certain concentration by forming/precipitating/separating $CaF_2$ with low solubility through the reaction of slaked lime and fluoride, environmental regulations are still not met.

As a result, the filtrate is diluted and discharged after repeated slaked lime treatment processes, or $CaF_2$ is separated and buried after heating/concentration/crystallization.

Recently, with the rapid increase in demand for lithium secondary batteries, measures to secure the four major components (i.e., anode, cathode, electrolyte and separator) are being highlighted. However, since core raw materials are still entirely dependent on imports, there is a need to develop technologies for self-sufficiency in core materials by using recycled resources.

Through various studies, the applicant of the present disclosure has manufactured lithium fluoride, a raw material for lithium secondary battery electrolyte, by utilizing lithium sludge generated in the processes of manufacturing lithium secondary batteries and recycling waste lithium secondary batteries, and fluoride sludge generated in the semiconductor and display industries.

Further, the applicants of the present disclosure have developed a method for recovery of high value-added resources from lithium sludge and fluoride sludge, as integrated processing technology capable of significantly reducing the amount of slaked lime used in the process of treating fluoride sludge and the amount of waste solids ($CaF_2$) generated after treatment to suppress the environmental burden, and

securing economic feasibility and significantly reducing the amount of wastewater by introducing high-efficiency recovery technology for unrecovered lithium ions that may be generated in the process of manufacturing lithium fluoride. Thereafter, they have completed the present disclosure.

[Disclosure]

[Technical Problem]

Accordingly, an objective of the present disclosure is to provide a method for recovery of high value-added resources from lithium sludge and fluoride sludge, comprising preparing lithium fluoride, which is a raw material for lithium secondary battery electrolyte, by using lithium sludge generated in the processes of manufacturing lithium secondary batteries and recycling waste lithium secondary batteries and fluoride sludge generated in the semiconductor and display industries.

Further, an objective of the present disclosure is to provide a method for recovery of high value-added resources from lithium sludge and fluoride sludge, which can significantly reduce the amount of slaked lime used in the process of treating fluoride sludge and the amount of waste solids ($CaF_2$) generated after the treatment to suppress the environmental burden.

Further, an objective of the present disclosure is to provide a method for recovery of high value-added resources from lithium sludge and fluoride sludge, which can secure economic feasibility and significantly reduce the amount of wastewater by introducing high-efficiency recovery technology for unrecovered lithium ions that may be generated in the process of manufacturing lithium fluoride.

The objectives of the present disclosure are not limited to the objects described above and other objectives will be clearly understood by those skilled in the art from the following description.

[Technical Solution]

In order to achieve the objectives, according to an aspect of the present disclosure, there is provided a method for recovery of high value-added resources from lithium sludge and fluoride sludge, comprising the steps of:

(a-1) adding fluoride sludge, which is a precipitant, to lithium sludge, followed by precipitation and separation, to prepare lithium fluoride (LiF), which is an insoluble lithium compound;
(a-2) reacting the reaction filtrate remaining after the preparation of the lithium fluoride, which is an insoluble lithium compound, with an aluminum compound to prepare Li-Al layered double hydroxide (LDH), which is an insoluble lithium compound;
(a-3) subjecting the Li-Al layered double hydroxide (LDH), which is an insoluble lithium compound, to a sulfation reaction with a sulfuric acid compound to prepare a conversion product;
(a-4) water leaching the lithium contained in the conversion product to prepare a lithium concentrate;
(a-5) recirculating the lithium concentrate as a lithium raw material in the step of (a) preparing the lithium fluoride (LiF);
(a-6) reacting the filtrate remaining after the preparation of the Li-Al layered double hydroxide (LDH), which is an insoluble lithium compound, with a calcium compound to separate the filtrate into a calcium fluoride precipitate and residual process water.

According to one embodiment of the present disclosure, the lithium sludge may be lithium sludge generated in the processes of manufacturing lithium secondary batteries and recycling waste lithium secondary batteries, and the fluoride sludge may be fluoride sludge generated in the semiconductor and display industries.

According to one embodiment of the present disclosure, the lithium sludge may comprise at least one selected from the group consisting of lithium hydroxide, lithium carbonate, lithium sulfate, lithium phosphate and lithium chloride, and
the form of the lithium sludge may comprise a solution or a slurry.

According to one embodiment of the present disclosure, the fluoride sludge may comprise at least one selected from the group consisting of sodium fluoride (NaF), ammonium fluoride ($NH_4F$), potassium fluoride (KF), ferrous fluoride ($FeF_2$), ferric fluoride ($FeF_3$), aluminum fluoride ($AlF_3$) and hydrogen fluoride (HF), and
the form of the fluoride sludge may comprise a solution or a slurry.

According to one embodiment of the present disclosure, the lithium sludge may have a lithium ion concentration of 200 ppm to 5,000 ppm.

According to one embodiment of the present disclosure, the fluoride sludge may have a fluorine ion concentration of 500 ppm to 150,000 ppm.

According to one embodiment of the present disclosure, the content ratio of lithium (Li) in the lithium sludge and fluorine (F) in the fluoride sludge may be a molar ratio of Li:F of 1:0.1 to 1:10.

According to one embodiment of the present disclosure, the aluminum compound may be at least one selected from the group consisting of aluminum chloride, sodium aluminate, aluminum powder, aluminum hydroxide, aluminum sulfate and alumina.

According to one embodiment of the present disclosure, the concentration of fluorine ions contained in the remaining process water after the precipitation of calcium fluoride may be 100 ppm or less.

According to one embodiment of the present disclosure, the remaining process water may be recovered and used to adjust a pH for water treatment.

According to one embodiment of the present disclosure, the lithium concentrate may comprise lithium (Li) ions, sulfuric acid ($SO_4$) ions or metal (M) ions as ionic components.

According to one embodiment of the present disclosure, the sulfuric acid compound may be at least one selected from the group consisting of:
sulfuric acid ($H_2SO_4$), sulfurous acid ($H_2SO_3$), hyposulphite ($H_2SO_2$), magnesium sulfate ($MgSO_4$), magnesium sulfite ($MgSO_3$), magnesium hyposulfite ($MgSO_2$), calcium sulfate ($CaSO_4$), calcium sulfite ($CaSO_3$), calcium hyposulfite ($CaSO_2$), sodium sulfate ($Na_2SO_4$), sodium sulfite ($Na_2SO_3$), sodium hyposulfite ($Na_2SO_2$), potassium sulfate ($K_2SO_4$), potassium sulfite ($K_2SO_3$), potassium hyposulfite ($K_2SO_2$), ferrous sulfate ($FeSO_4$), ferrous sulfite ($FeSO_3$), ferrous hyposulfite ($FeSO_2$), ferric sulfate ($Fe_2(SO_4)_3$), ferric sulfate ($Fe_2(SO_3)_3$), ferric hyposulfite ($Fe_2(SO_2)_3$), ammonium sulfate (($NH_4)_2SO_4$), sulfuric acid Aluminum ($Al_2(SO_4)_3$), aluminum sulfite ($Al_2(SO_3)_3$) and aluminum hyposulfite ($Al_2(SO_2)_3$).

According to one embodiment of the present disclosure, the reaction temperature during the sulfation reaction between the Li-Al layered double hydroxide (LDH) and the sulfur acid compound may be 200°C to 1,000°C.

According to one embodiment of the present disclosure, the reaction time for the sulfation reaction between the Li-Al layered double hydroxide (LDH) and the sulfuric acid compound may be 0.5 to 36 hours.

According to one embodiment of the present disclosure, the solid/liquid ratio (solid/liquid, g/L) of the conversion product and water during the water leaching may be 30 g/L to 2,000 g/L.

Further, according to another aspect of the present disclosure, there is provided a method for recovery of high value-added resources from lithium sludge and fluoride sludge, comprising the steps of:

(b-1) adding fluoride sludge, which is a precipitant, to the lithium sludge, followed by precipitation and separation, to prepare lithium fluoride (LiF), which is an insoluble lithium compound;
(b-2) subjecting the reaction filtrate remaining after the preparation of the lithium fluoride (LiF), which is an insoluble lithium compound, to mechanical vapor recompression (MVR) to additionally precipitate and separate lithium fluoride (LiF), and separating a concentrate containing trace amounts of lithium, fluorine and other cations and anions; and
(b-3) reacting the concentrate containing trace amounts of lithium, fluorine and other cations and anions with a calcium compound to separate the concentrate into a calcium fluoride precipitate and residual process water.

According to one embodiment of the present disclosure, the lithium sludge may be lithium sludge generated in the processes of manufacturing lithium secondary batteries and recycling waste lithium secondary batteries, and the fluoride sludge may be fluoride sludge generated in the semiconductor and display industries.

According to one embodiment of the present disclosure, the lithium sludge may comprise at least one selected from the group consisting of lithium hydroxide, lithium carbonate, lithium sulfate, lithium phosphate and lithium chloride, and
the form of the lithium sludge may comprise a solution or a slurry.

According to one embodiment of the present disclosure, the fluoride sludge may comprise at least one selected from the group consisting of sodium fluoride (NaF), ammonium fluoride ($NH_4F$), potassium fluoride (KF), ferrous fluoride ($FeF_2$), ferric fluoride ($FeF_3$), aluminum fluoride ($AlF_3$) and hydrogen fluoride (HF), and
the form of the fluoride sludge may comprise a solution or a slurry.

According to one embodiment of the present disclosure, the lithium sludge may have a lithium ion concentration of 200 ppm to 5,000 ppm.

According to one embodiment of the present disclosure, the fluoride sludge may have a fluorine ion concentration of 500 ppm to 150,000 ppm.

According to one embodiment of the present disclosure, the content ratio of lithium (Li) in the lithium sludge and fluorine (F) in the fluoride sludge may be a molar ratio of Li:F of 1:0.1 to 1:10.

According to one embodiment of the present disclosure, the concentration of fluorine ions contained in the remaining process water after the precipitation of calcium fluoride may be 100 ppm or less.

According to one embodiment of the present disclosure, the remaining process water may be recovered and used to adjust a pH for water treatment.

[Advantageous Effects]

According to the present disclosure, there is provided a method for recovery of high value-added resources from lithium sludge generated in the processes of manufacturing lithium secondary batteries and recycling waste lithium secondary batteries and from fluoride sludge generated in the display industry, which reduces waste disposal costs and lithium fluoride recovery costs.

Further, the present disclosure provides a method for recovery of high value-added resources from lithium sludge and fluoride sludge, which significantly reduces the amount of slaked lime used in the process of treating fluoride sludge and the amount of waste solids ($CaF_2$) generated after the treatment, thereby significantly reducing the environmental burden and achieving high process efficiency.

Further, the present disclosure provides a method for recovery of high value-added resources from lithium sludge and fluoride sludge, which can secure economic feasibility and significantly reduce the amount of wastewater by introducing high-efficiency recovery technology for unrecovered lithium ions that may be generated in the process of preparing lithium fluoride. Thus, such a method is environmentally friendly and economical.

The effects of the present disclosure are not limited thereto and it should be understood that the effects include all effects that can be inferred from the configuration of the present disclosure described in the following specification or claims.

[Description of Drawings]

FIG. 1 is a process flow chart of a method for recovery of high value-added resources from lithium sludge and fluoride sludge according to an embodiment of the present disclosure.

FIG. 2 is a graph showing the results of analyzing the XRD crystal structure of lithium fluoride prepared by reacting lithium sludge with fluoride sludge at an equivalent ratio for each concentration according to an embodiment of the present disclosure.

FIG. 3 is a graph showing the results of analyzing the XRD crystal structure of Li-Al LDH prepared by reacting a filtrate remaining after the preparation of lithium fluoride with an aluminum compound according to an embodiment of the present disclosure.

FIG. 4 is a graph showing the results of analyzing the XRD crystal structure of lithium fluoride formed after applying an MVR process to the reaction filtrate remaining after the preparation of lithium fluoride according to an embodiment of the present disclosure.

[Best Mode]

Hereinafter, preferred embodiments of the present disclosure will be described with reference to accompanying drawings.

The advantages and features of the present disclosure, and methods of achieving them will be clear by referring to the exemplary embodiments that will be described hereafter in detail with reference to the accompanying drawings.

However, the present disclosure is not limited to the exemplary embodiments described hereafter and may be implemented in various ways, and the exemplary embodiments are provided to complete the description of the present disclosure and let those skilled in the art completely know the scope of the present disclosure and the present disclosure is defined by claims.

Further, when it is determined that well-known technologies, etc. may make the scope of the present disclosure unclear, they will not be described in detail in the following description.

Hereinafter, the present disclosure is described in detail.

**Method (I) for recovery of lithium fluoride from lithium sludge and fluoride sludge and high-efficiency lithium ion recovery method**

The method for recovery of lithium fluoride from lithium sludge and fluoride sludge and high-efficiency lithium ion recovery method of the present disclosure comprises the steps of:

(a-1) adding fluoride sludge, which is a precipitant, to lithium sludge, followed by precipitation and separation, to prepare lithium fluoride (LiF), which is an insoluble lithium compound;

(a-2) reacting the reaction filtrate remaining after the preparation of the lithium fluoride, which is an insoluble lithium compound, with an aluminum compound to prepare Li-Al layered double hydroxide (LDH), which is an insoluble lithium compound;

(a-3) subjecting the Li-Al layered double hydroxide (LDH), which is an insoluble lithium compound, to a sulfation reaction with a sulfuric acid compound to prepare a conversion product;

(a-4) water leaching the lithium contained in the conversion product to prepare a lithium concentrate;

(a-5) recirculating the lithium concentrate as a lithium raw material in the step of (a) preparing the lithium fluoride (LiF);

(a-6) reacting the filtrate remaining after the preparation of the Li-Al layered double hydroxide (LDH), which is an insoluble lithium compound, with a calcium compound to separate the filtrate into a calcium fluoride precipitate and residual process water.

Here, the method for recovery of lithium fluoride from lithium sludge and fluoride sludge and high-efficiency lithium ion recovery method provides a method for recovery of high value-added resources from lithium sludge generated in the processes of manufacturing lithium secondary batteries and recycling waste lithium secondary batteries and from fluoride sludge generated in the display industry, thereby reducing waste disposal costs and lithium fluoride recovery costs.

Further, the method for recovery of lithium fluoride from lithium sludge and fluoride sludge and high-efficiency lithium ion recovery method provides a method for recovery of high value-added resources from lithium sludge and fluoride sludge, which significantly reduces the amount of slaked lime used in the process of treating fluoride sludge and the amount of waste solids ($CaF_2$) generated after the treatment, thereby significantly reducing the environmental burden and achieving high process efficiency.

Further, the method for recovery of lithium fluoride from lithium sludge and fluoride sludge and high-efficiency lithium ion recovery method provides a method for recovery of high value-added resources from lithium sludge and fluoride sludge, which can secure economic feasibility and significantly reduce the amount of wastewater by introducing high-efficiency recovery technology for unrecovered lithium ions that may be generated in the process of preparing lithium fluoride. Thus, such a method is environmentally friendly and economical.

Further, the lithium sludge may be a solution or a slurry of at least one lithium compound selected from the group consisting of LiOH, LiCl, LiBr, $Li_2CO_3$, $Li_2SO_4$, $Li_3PO_4$ and $LiAl(Si_2O_5)_2$, but the present disclosure is not limited thereto.

Further, the lithium sludge may comprise at least one selected from the group consisting of lithium hydroxide, lithium carbonate, lithium sulfate, lithium phosphate and lithium chloride, and

the form of the lithium sludge may comprise a solution or a slurry.

Further, the lithium sludge may have a lithium ion concentration of 200 ppm to 5,000 ppm.

At this time, the lithium ion concentration of the lithium sludge may preferably be 500 ppm to 4,000 ppm, and more preferably 800 ppm to 3,500 ppm.

Further, the fluoride sludge may comprise at least one selected from the group consisting of sodium fluoride (NaF), ammonium fluoride ($NH_4F$), potassium fluoride (KF), ferrous fluoride ($FeF_2$), ferric fluoride ($FeF_3$), aluminum fluoride ($AlF_3$) and hydrogen fluoride (HF), and

the form of the fluoride sludge may comprise a solution or a slurry.

Here, the fluoride sludge may have a fluorine ion concentration of 500 ppm to 150,000 ppm.

At this time, the fluoride ion concentration of the fluoride sludge may preferably be 800 ppm to 130,000 ppm, and more preferably 1,000 ppm to 120,000 ppm.

Further, in the step of (a-1) adding fluoride sludge, which is a precipitant, to lithium sludge, followed by precipitation and separation, to prepare lithium fluoride (LiF), which is an insoluble lithium compound, lithium fluoride may be prepared by using the lithium sludge and the fluoride sludge, followed by precipitation and separation, to obtain lithium fluoride.

Here, the content ratio of lithium (Li) in the lithium sludge and fluorine (F) in the fluoride sludge may be a molar ratio of Li:F of 1:0.1 to 1:10.

At this time, when the content ratio of lithium (Li) in the lithium sludge and fluorine (F) in the fluoride sludge is less than a molar ratio of Li:F of 1:0.1, the content of the prepared lithium fluoride is insufficient, and, when the content ratio of lithium (Li) in the lithium sludge and fluorine (F) in the fluoride sludge exceeds a molar ratio of Li:F of 1:10, economic feasibility may be reduced.

Further, the step of (a-2) reacting the reaction filtrate remaining after the preparation of the lithium fluoride, which is an insoluble lithium compound, with an aluminum compound to prepare Li-Al layered double hydroxide (LDH), which is an insoluble lithium compound,
the lithium ions in the reaction filtrate and the aluminum ions of the aluminum compound may react with hydroxide ions to prepare Li-Al layered double hydroxide (Li-Al LDH), which is an insoluble lithium compound.

Here, the aluminum compound may be at least one selected from the group consisting of aluminum chloride, sodium aluminate, aluminum powder, aluminum hydroxide, aluminum sulfate and alumina.

Further, the layered double hydroxide (LDH) is a class of ionic solids characterized by a layered structure, generally with the layer sequence [AcB-Z-AcB]n. Here, c represents a layer of metal cations, and A and B are layers of hydroxide (OH-). Z is a layer of other anions or neutral molecules such as water. The inserted anions (Z) are weakly bound and exchangeable.

Further, $Li^+$ and $Al^{3+}$ cations are combined with hydroxide ions to form the Li-Al layered double hydroxide (Li-Al LDH) represented by the following formula 1:

$$[Formula\ I]\qquad [Li^+Al^{3+}_2(HO^-)_6]^+[Li^+Al^{3+}_2(X^{6-})\cdot yH_2O]^-$$

wherein $X^{6-}$ is one or more anions, comprises hydroxide ions, and represents a total charge of -6; and y is generally 0.5 to 4.

Further, in the step of (a-3) subjecting the Li-Al layered double hydroxide (LDH), which is an insoluble lithium compound, to a sulfation reaction with a sulfuric acid compound to prepare a conversion product; and in the step of (a-4) water leaching the lithium contained in the conversion product to prepare a lithium concentrate,
the Li-Al layered double hydroxide (LDH) may be subjected to a sulfation reaction with the sulfuric acid compound and then water leached to prepare a lithium concentrate in which high concentrations of lithium (Li) ions, sulfuric acid ($SO_4$) ions, or metal (M) ions are dissolved.

In the step of (a-5) recirculating the lithium concentrate as a lithium raw material in the step of (a) preparing the lithium fluoride (LiF), the lithium concentrate in which high concentrations of lithium (Li) ions, sulfuric acid ($SO_4$) ions, or metal (M) ions are dissolved may be recirculated as a lithium raw material.

At this time, the sulfuric acid compound may be at least one selected from the group consisting of:
sulfuric acid ($H_2SO_4$), sulfurous acid ($H_2SO_3$), hyposulphite ($H_2SO_2$), magnesium sulfate ($MgSO_4$), magnesium sulfite ($MgSO_3$), magnesium hyposulfite ($MgSO_2$), calcium sulfate ($CaSO_4$), calcium sulfite ($CaSO_3$), calcium hyposulfite ($CaSO_2$), sodium sulfate ($Na_2SO_4$), sodium sulfite ($Na_2SO_3$), sodium hyposulfite ($Na_2SO_2$), potassium sulfate ($K_2SO_4$), potassium sulfite ($K_2SO_3$), potassium hyposulfite ($K_2SO_2$), ferrous sulfate ($FeSO_4$), ferrous sulfite ($FeSO_3$), ferrous hyposulfite ($FeSO_2$), ferric sulfate ($Fe_2(SO_4)_3$), ferric sulfate ($Fe_2(SO_3)_3$), ferric hyposulfite ($Fe_2(SO_2)_3$), ammonium sulfate ($(NH_4)_2SO_4$), sulfuric acid Aluminum ($Al_2(SO_4)_3$), aluminum sulfite ($Al_2(SO_3)_3$) and aluminum hyposulfite ($Al_2(SO_2)_3$).

Further, the reaction temperature during the sulfation reaction between the Li-Al layered double hydroxide and the sulfuric acid compound may be 200°C to 1,000°C.

Here, when the reaction temperature during the sulfation reaction is less than 200°C, there is a problem that the yield of the sulfation reaction is reduced, and, when the reaction temperature during the sulfation reaction is more than 1,000°C, there is a problem that manufacturing costs increase.

At this time, the reaction time for the sulfation reaction between the Li-Al layered double hydroxide and the sulfuric acid compound may be 0.5 to 36 hours.

Here, when the reaction time during the sulfation reaction is less than 0.5 hours, there is a problem that the yield of the sulfur oxidation reaction is reduced, and, when the reaction time during the sulfation reaction is more than 36 hours, there is a problem that manufacturing costs increase.

Further, the solid/liquid ratio (solid/liquid, g/L) of the conversion product and water during the water leaching may be 30 g/L to 2,000 g/L.

Here, when the solid/liquid ratio (solid/liquid, g/L) of the conversion product and water is less than 30 g/L, there is a problem in that the lithium ion concentration of the prepared lithium concentrate is low, and, when the solid/liquid ratio (solid/liquid, g/L) of the conversion product and water exceeds 2,000 g/L, there is a problem in that the lithium solution recovery rate is lowered.

Further, in the step of (a-6) reacting the filtrate remaining after the preparation of the Li-Al layered double hydroxide (LDH), which is an insoluble lithium compound, with a calcium compound to separate the filtrate into a calcium fluoride precipitate and residual process water, the filtrate is reacted with a calcium compound to precipitate calcium fluoride, and the remaining process water is separated.

Here, the concentration of fluorine ions contained in the remaining process water after the precipitation of the calcium fluoride may be 100 ppm or less.

At this time, the fluorine ion concentration contained in the remaining process water after the precipitation of calcium fluoride may be preferably 80 ppm or less, and more preferably 40 ppm.

Further, the remaining process water may be recovered and used to adjust a pH for water treatment.

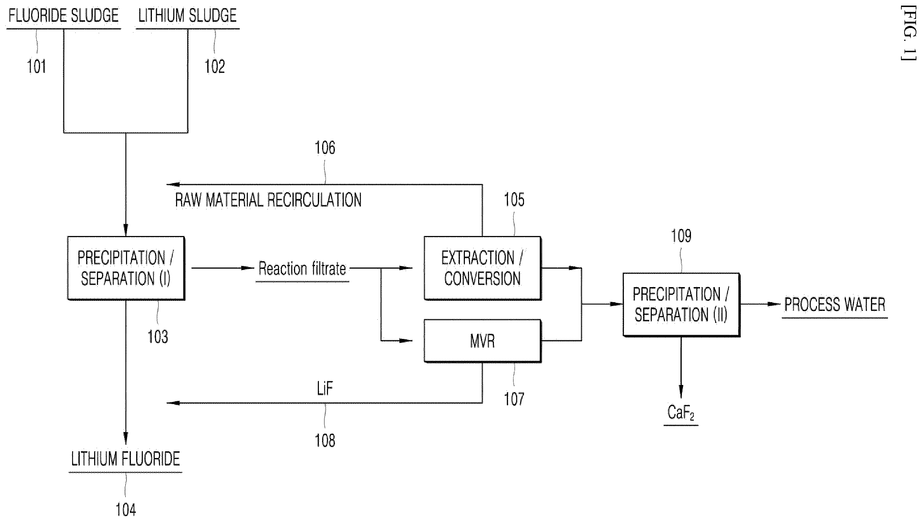

FIG. 1 is a process flow chart of a method for recovery of high value-added resources from lithium sludge and fluoride sludge according to an embodiment of the present disclosure.

Referring to FIG. 1, fluoride sludge 101 generated in the semiconductor and display industries may be reacted with lithium sludge 102 generated in the processes of manufacturing lithium secondary batteries and recycling waste lithium secondary batteries, followed by first-step precipitation and separation 103, to prepare lithium fluoride 104, which is an insoluble lithium compound.

Then, the reaction filtrate remaining after first-step precipitation and separation 103 may be reacted with an aluminum compound, followed by extraction and conversion 105, to prepare Li-Al LDH, which is an insoluble lithium compound.

Then, the Li-Al LDH, which is an insoluble lithium compound, may be subjected to a sulfation reaction and water leached to prepare a lithium concentrate, followed by recirculation 106 as a lithium raw material.

Further, the reaction filtrate remaining after the preparation of the Li-Al LDH, which is an insoluble lithium compound, may be reacted with a calcium compound, followed by second-step precipitation and separation 109, to separate the filtrate into a calcium fluoride precipitate and residual process water.

**Method (II) for preparation of lithium fluoride from lithium sludge and fluoride sludge and high-efficiency sludge treatment method**

The method for preparation of lithium fluoride from lithium sludge and fluoride sludge and high-efficiency sludge treatment method of the present disclosure comprises the steps of:

(b-1) adding fluoride sludge, which is a precipitant, to the lithium sludge, followed by precipitation and separation, to prepare lithium fluoride (LiF), which is an insoluble lithium compound;

(b-2) subjecting the reaction filtrate remaining after the preparation of the lithium fluoride (LiF), which is an insoluble lithium compound, to mechanical vapor recompression (MVR) to additionally precipitate and separate lithium fluoride (LiF), and separating a concentrate containing trace amounts of lithium, fluorine and other cations and anions; and

(b-3) reacting the concentrate containing trace amounts of lithium, fluorine and other cations and anions with a calcium compound to separate the concentrate into a calcium fluoride precipitate and residual process water.

Here, the method for preparation of lithium fluoride from lithium sludge and fluoride sludge and high-efficiency sludge treatment method provides a method for recovery of high value-added resources and sludge treatment method, comprising preparing lithium fluoride from lithium sludge generated in the processes of manufacturing lithium secondary batteries and recycling waste lithium secondary batteries and from fluoride sludge generated in the semiconductor and display industries, thereby reducing waste disposal costs and lithium fluoride recovery costs.

Further, the method for preparation of lithium fluoride from lithium sludge and fluoride sludge and high-efficiency sludge treatment method provides a method for recovery of high value-added resources from lithium sludge and fluoride sludge, which significantly reduces the amount of slaked lime used in the process of treating fluoride sludge and the amount of waste solids ($CaF_2$) generated after the treatment, thereby significantly reducing the environmental burden and achieving high process efficiency.

Further, the method for preparation of lithium fluoride from lithium sludge and fluoride sludge and high-efficiency sludge treatment method provides a method for recovery of high value-added resources from lithium sludge and fluoride sludge, which can secure economic feasibility and significantly reduce the amount of wastewater by introducing a high-efficiency recovery technology for unrecovered lithium ions that may be generated during the preparation of lithium fluoride. Thus, such a method is environmentally friendly and economical.

Further, the lithium sludge may be a solution or a slurry of at least one lithium compound selected from the group consisting of LiOH, LiCl, LiBr, $Li_2CO_3$, $Li_2SO_4$, $Li_3PO_4$ and $LiAl(Si_2O_5)_2$, but the present disclosure is not limited thereto.

Further, the lithium sludge may comprise at least one selected from the group consisting of lithium hydroxide, lithium carbonate, lithium sulfate, lithium phosphate and lithium chloride, and
the form of the lithium sludge may comprise a solution or a slurry.

Further, the lithium sludge may have a lithium ion concentration of 200 ppm to 5,000 ppm.

At this time, the lithium ion concentration of the lithium sludge may preferably be 500 ppm to 4,000 ppm, and more preferably 800 ppm to 3,500 ppm.

Further, the fluoride sludge may comprise at least one selected from the group consisting of sodium fluoride (NaF), ammonium fluoride ($NH_4F$), potassium fluoride (KF), ferrous fluoride ($FeF_2$), ferric fluoride ($FeF_3$), aluminum

fluoride ($AlF_3$) and hydrogen fluoride (HF), and

the form of the fluoride sludge may comprise a solution or a slurry.

Here, the fluoride sludge may have a fluorine ion concentration of 500 ppm to 150,000 ppm.

At this time, the fluoride ion concentration of the fluoride sludge may preferably be 800 ppm to 130,000 ppm, and more preferably 1,000 ppm to 120,000 ppm.

Further, in the step of (b-1) adding fluoride sludge, which is a precipitant, to the lithium sludge, followed by precipitation and separation, to prepare lithium fluoride (LiF), which is an insoluble lithium compound, lithium fluoride may be prepared by using the lithium sludge and the fluoride sludge, followed by precipitation and separation, to obtain lithium fluoride.

Here, the content ratio of lithium (Li) in the lithium sludge and fluorine (F) in the fluoride sludge may be a molar ratio of Li:F of 1:0.1 to 1:10.

At this time, when the content ratio of lithium (Li) in the lithium sludge and fluorine (F) in the fluoride sludge is less than a molar ratio of Li:F of 1:0.1, the content of the prepared lithium fluoride is insufficient, and, when the content ratio of lithium (Li) in the lithium sludge and fluorine (F) in the fluoride sludge exceeds a molar ratio of Li:F of 1:10, economic feasibility may be reduced.

Further, the step of (b-2) subjecting the reaction filtrate remaining after the preparation of the lithium fluoride (LiF), which is an insoluble lithium compound, to mechanical vapor recompression (MVR) to additionally precipitate and separate lithium fluoride (LiF), and separating a concentrate containing trace amounts of lithium, fluorine and other cations and anions, the precipitated lithium fluoride (LiF) is separated, and a concentrated solution containing trace amounts of lithium, fluorine, and other cations and anions is then separated and obtained.

Thereafter, in the step of (b-3) reacting the concentrate containing trace amounts of lithium, fluorine and other cations and anions with a calcium compound to separate the concentrate into a calcium fluoride precipitate and residual process water, the concentrate is reacted with a calcium compound to precipitate calcium fluoride, and the remaining process water is separated.

Here, the concentration of fluorine ions contained in the remaining process water after the precipitation of the calcium fluoride may be 100 ppm or less.

At this time, the fluorine ion concentration contained in the remaining process water after the precipitation of the calcium fluoride may be preferably 80 ppm or less, and more preferably 40 ppm.

Further, the remaining process water may be recovered and used to adjust a pH for water treatment.

FIG. 1 is a process flow chart of a method for recovery of high value-added resources from lithium sludge and fluoride sludge according to an embodiment of the present disclosure.

Referring to FIG. 1, fluoride sludge 101 generated in the semiconductor and display industries may be reacted with lithium sludge 102 generated in the processes of manufacturing lithium secondary batteries and recycling waste lithium secondary batteries, followed by first-step precipitation and separation 103, to prepare lithium fluoride 104, which is an insoluble lithium compound.

Then, the reaction filtrate obtained after first-step precipitation and separation 103 may be subjected to mechanical vapor recompression (MVR) 107 to additionally precipitate and separate lithium fluoride (LiF), and a concentrate containing trace amounts of lithium, fluorine and other cations and anions may be separated, and

the concentrate may be reacted with a calcium compound, followed by second-step precipitation and separation 109, to separate the concentrate into a calcium fluoride precipitate and residual process water.

[Mode for Invention]

Hereafter, preferred embodiments are proposed to help understand the present disclosure, but the following embodiments just exemplify the present disclosure and the scope of the present disclosure is not limited to the following embodiments. The following embodiments may be appropriately modified and changed by those skilled in the art within the scope of the present disclosure.

**<Embodiment>**

**<Embodiment 1> Preparing lithium fluoride by using ammonium fluoride precipitate depending on type of lithium solution**

Lithium carbonate, lithium hydroxide, lithium sulfate, and lithium chloride solutions with a lithium ion concentration of about 2,000 ppm were reacted with ammonium fluoride ($NH_4F$), which is a precipitant, by stirring at a Li:F molar ratio of 1:1 for 24 hours to prepare lithium fluoride with a high lithium concentration.

Thereafter, the lithium ion concentration of the sample filtrate remaining after the preparation of the high-concentration lithium fluoride was analyzed by inductively coupled plasma atomic emission spectroscopy (ICP-AES;

Optima 7300D, Perkinelmer), and the lithium ion recovery rate was confirmed as shown in Table 1 below.

The lithium ion recovery rate was confirmed by using Equation 1 below:

$$[\text{Equation 1}]$$

$$\text{Lithium ion recovery rate (\%)} = (1 - Q/Q_o) \times 100$$

$Q_o$: Total amount of lithium ions contained in the lithium solution (mg)

$Q$: Total amount of lithium ions contained in the lithium solution after the precipitation reaction (mg)

Referring to Table 1 below, the lithium hydroxide solution with high initial pH showed the highest lithium recovery rate under equivalent ratio conditions.

[Table 1]

| Conditions (Li solution: Li$^+$ 2,000 ppm, 100 mL, 400RPM) | Reactant (NH$_4$F) Equivalent ratio (Li/F) | Initial pH | Reaction time (hour) | Li$^+$ conc. (ppm) | Li$^+$ recovery rate (%) |
|---|---|---|---|---|---|
| LiOH sol. | 1 | 12.6 | Initial | 2036.72 | - |
| | | | 24 | 358.003 | 82.423 |
| LiCl sol. | | 5.6 | Initial | 2062.082 | - |
| | | | 24 | 421.6 | 79.555 |
| Li$_2$SO$_4$ sol. | | 8.9 | Initial | 2195.497 | - |
| | | | 24 | 579.505 | 73.605 |
| Li$_2$CO$_3$ sol. | | 10.1 | Initial | 2058.755 | - |
| | | | 24 | 559.540 | 72.821 |

### <Embodiment 2> Preparing lithium fluoride by using ammonium fluoride precipitant depending on lithium solution concentration

Lithium hydroxide solutions with a lithium ion concentration of about 1,000 ppm and 2,000 ppm were reacted with ammonium fluoride (NH$_4$F), which is a precipitant, by stirring at a Li:F molar ratio of 1:1 for 24 hours to prepare lithium fluoride with a high lithium concentration.

Thereafter, the lithium ion concentration of the sample filtrate remaining after the preparation of the high-concentration lithium fluoride was analyzed by inductively coupled plasma atomic emission spectroscopy (ICP-AES; Optima 7300D, Perkinelmer), and the lithium ion recovery rate was confirmed as shown in Table 2 below.

The lithium ion recovery rate was confirmed by using Equation 1 mentioned above.

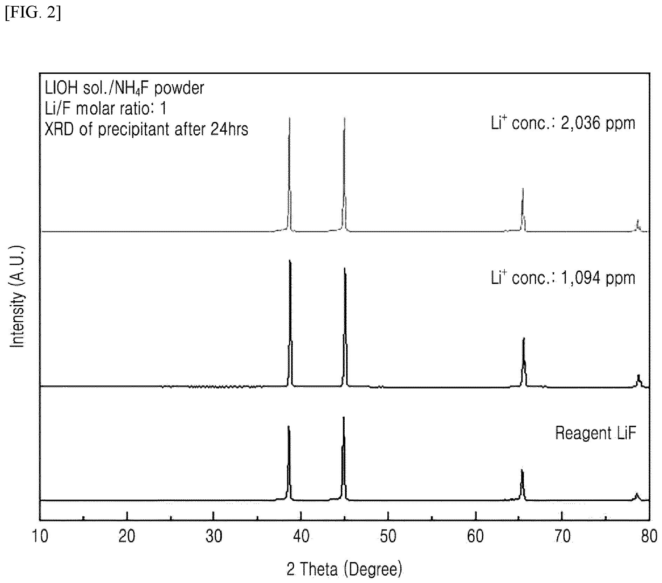

FIG. 2 is a graph showing the results of analyzing the XRD crystal structure of lithium fluoride prepared by reacting lithium sludge with fluoride sludge at an equivalent ratio for each concentration according to Embodiment 2.

Referring to FIG. 2, the crystal structure of lithium fluoride prepared in Embodiment 2 was analyzed by using X-ray diffraction analysis (XRD; D/MAX 2200, Rigaku), and the same diffraction angle as that of the lithium fluoride reagent was measured.

Referring to Table 2 below, it was analyzed that the lithium recovery rate increased as the initial lithium ion concentration increased.

[Table 2]

| Conditions (Li/F molar ratio = 1), 100mL, 24h, 400RPM | Lithium ion concentration (initial concentration, ppm) | Li$^+$ conc. (ppm) | Li$^+$ recovery rate (%) |
|---|---|---|---|
| LiOH + NH$_4$F | 1,094.796 | 451.149 | 58.792 |
| | 2036.72 | 358.003 | 82.423 |

**<Embodiment 3> Preparing lithium fluoride by using ammonium fluoride precipitant depending on pH of lithium solution**

A lithium hydroxide solution with a lithium ion concentration of about 2,000 ppm was reacted with ammonium fluoride ($NH_4F$), which is a precipitant, by stirring at a Li:F molar ratio of 1:2 for 24 hours to prepare lithium fluoride with a high lithium concentration.

Thereafter, the lithium ion concentration of the sample filtrate remaining after the preparation of the high-concentration lithium fluoride was analyzed by inductively coupled plasma atomic emission spectroscopy (ICP-AES; Optima 7300D, Perkinelmer), and the lithium ion recovery rate was confirmed as shown in Table 3 below.

The lithium ion recovery rate was confirmed by using Equation 1 mentioned above.

Referring to Table 3 below, it was analyzed that the recovery rate decreased as the pH decreased.

[Table 3]

| Conditions (Li solution: Li$^+$ 2,000 ppm, 100 mL, 24h) | Reactant ($NH_4F$) Equivalent ratio (Li/F) | pH adjusted after mixing/reaction | Li$^+$ conc. (ppm) | Li$^+$ recovery rate (%) |
|---|---|---|---|---|
| pH control: $H_2SO_4$ sol. | 1 | Initial pH | 287.786 | 86.3 |
| | | 10.9 | 405.156 | 80.946 |
| | | 9.1 | 434.487 | 79.566 |
| | | 6.9 | 509.773 | 76.026 |
| | | 4.8 | 602.798 | 71.651 |
| | | 3.1 | 937.823 | 55.895 |
| pH control: HCl sol. | | Initial pH | 287.786 | 86.3 |
| | | 10.7 | 363.266 | 82.916 |
| | | 9.2 | 384.611 | 81.912 |
| | | 6.9 | 411.352 | 80.654 |
| | | 5.1 | 456.073 | 78.551 |
| | | 3 | 708.044 | 66.701 |

**<Embodiment 4> Preparing lithium fluoride depending on types of lithium solution and fluoride solution**

A lithium hydroxide solution with a lithium ion concentration of about 1,000 ppm was reacted with a hydrofluoric acid (HF) or ammonium fluoride ($NH_4F$) solution, which is a precipitant, by stirring at a Li:F molar ratio of 1:1 for 24 hours to prepare lithium fluoride with a high lithium concentration.

A lithium hydroxide solution with a lithium ion concentration of about 2,000 ppm was reacted with a hydrofluoric acid (HF) or ammonium fluoride ($NH_4F$) solution, which is a precipitant, by stirring at a Li:F molar ratio of 1:2 for 24 hours to prepare lithium fluoride with a high lithium concentration.

Thereafter, the lithium ion concentration of the sample filtrate remaining after the preparation of the high-concentration lithium fluoride was analyzed by inductively coupled plasma atomic emission spectroscopy (ICP-AES; Optima 7300D, Perkinelmer), and the lithium ion recovery rate was confirmed as shown in Table 4 below.

The lithium ion recovery rate was confirmed by using Equation 1 mentioned above.

Referring to Table 4 below, the hydrofluoric acid solution showed a large decrease in pH after mixing, and a decrease in reactivity caused therefrom was observed, which was similar to the trend shown in Embodiment 3 that the recovery rate decreased as the pH decreased.

Further, it was confirmed that the higher the lithium ion concentration, the higher the lithium fluoride recovery rate.

[Table 4]

| Conditions (HF vs NH₄F), 100mL, 24h, 400RPM | Fluoride | Initial pH of LiOH | Final pH of mixture | Initial lithium ion concentration (ppm) | Lithium ion concentration after reaction (ppm) | Li⁺ recovery rate (%) |
|---|---|---|---|---|---|---|
| LiOH sol. (Li⁺conc.: 2,000 ppm) Li/F molar ratio = 1 | HF | 12.6 | 4.2 | 2036.72 | 432.297 | 78.774 |
| | NH₄F | 12.6 | 11.3 | 2036.72 | 358.003 | 82.423 |
| LiOH sol. (Li⁺conc.: 1,000 ppm) Li/F molar ratio = 1 | HF | 12.5 | 4.6 | 1094.796 | 493.305 | 54.941 |
| | NH₄F | 12.5 | 11.2 | 1094.796 | 451.149 | 58,792 |

**<Embodiment 5> Preparing lithium fluoride-I from lithium sludge and fluoride sludge**

Lithium sludge discharged from a cathode material manufacturer (Company A) with a lithium ion concentration of about 2,000 ppm was reacted with fluoride sludge discharged from a display manufacturer (Company C) with a fluorine concentration of about 6 wt% by stirring at a Li:F molar ratio of 1:1 for 24 hours to prepare lithium fluoride-I with a high lithium concentration.

Thereafter, the lithium ion concentration of the sample filtrate remaining after the preparation of the high-concentration lithium fluoride-I was analyzed by inductively coupled plasma atomic emission spectroscopy (ICP-AES; Optima 7300D, Perkinelmer), and the lithium ion recovery rate was confirmed as shown in Table 5 below.

The lithium ion recovery rate was confirmed by using Equation 1 mentioned above.

Referring to Table 5 below, wastewater discharged from the cathode material manufacturer (Company A) was used (lithium concentration: approximately 2,174 ppm) as lithium sludge, and wastewater discharged from the display manufacturer (Company C) was used (fluorine concentration: approximately 61,110 ppm) as fluoride sludge.

After reaction of lithium sludge and fluoride sludge, a lithium recovery rate of about 78% was analyzed.

In Embodiment 5, lithium fluoride prepared after the reaction of lithium and fluorine was prepared at a lithium/fluorine molar ratio of 1.

The concentration of fluorine contained in the used fluoride waste solution (24.2 mL applied) was about 61,110 ppm (mg/L), and the number of moles was 0.078 mol.

Approximately 249 mL of lithium sludge (Li⁺ conc.: 2,174 ppm) was used according to the reaction ratio (Li/F molar ratio: approximately 1).

By simply mixing lithium sludge (249 mL) and fluoride sludge (24.2 mL) by the dilution factor of about 11.29 times, the initial fluorine concentration decreased from 61,110 ppm to about 5,413 ppm.

After the simple mixing, the lithium concentration of the lithium sludge was diluted from 2,174.55 ppm to 1,981.93 ppm.

The lithium ion recovery rate of about 78% was confirmed through calculation of residual lithium concentration before/after dilution by lithium-based reaction mixing and after reaction.

Accordingly, about 0.06 mol of fluoride ion was consumed to form lithium fluoride, and 5,413 ppm of fluorine after dilution and about 1,196 ppm of fluorine after lithium fluoride reaction remained, and, thus, the fluoride ion consumption rate was confirmed to be about 77.9%.

In Embodiment 5, the use of fluoride sludge and lithium sludge is expected to reduce the amount of Ca-based (e.g., CaO, Ca(OH)₂ and CaCl₂) precipitants used to remove existing fluoride ions by more than 77%.

[Table 5]

| Conditions (Cathode material manufacturer Li sludge (Company A)/ NH₄F waste fluid (Company C)) | Li/F molar ratio | NH₄F waste fluid (F⁻ conc. 6%) (mL) | Reaction time (hour) | Li⁺ conc. (ppm) | Li⁺ recovery rate (%) |
|---|---|---|---|---|---|
| Li sludge/NH₄F sludge (F⁻ conc.: approximately 6%) | 1 | 24.2 | Initial | 2174.552 | |
| | | 24 | | 436.992 | 77.9 |

**<Embodiment 6> Preparing lithium fluoride-II from lithium sludge and fluoride sludge**

600 mL of lithium sludge discharged from the cathode material manufacturer (Company A) with a lithium ion concentration of about 2,500 ppm was reacted with 145.2 mL of fluoride sludge discharged from the display manufacturer (Company C) with a fluorine concentration of about 6 wt% by stirring at a Li:F molar ratio of 1:1 for 24 hours to prepare lithium fluoride-II with a high lithium concentration.

Thereafter, the lithium ion concentration of the sample filtrate remaining after the preparation of the high-concentration lithium fluoride-II was analyzed by inductively coupled plasma atomic emission spectroscopy (ICP-AES; Optima 7300D, Perkinelmer). The lithium ion concentration of the LiF reaction filtrate was confirmed to be 120.7 ppm, and the fluorine ion concentration was confirmed to be 435.5 ppm.

After the reaction of lithium sludge and fluoride sludge, a lithium recovery rate of about 94% was analyzed.

The lithium ion recovery rate was confirmed by using Equation 1 mentioned above.

### <Embodiment 7> Preparing Li-Al LDH-1 from lithium fluoride reaction filtrate

The reaction filtrate obtained after the preparation of lithium fluoride by reacting a lithium hydroxide solution with a lithium ion concentration of about 2,000 ppm with ammonium fluoride was reacted with sodium aluminate ($NaAlO_2$) or aluminum powder by stirring at a Al:Li molar ratio of 3:1 for 12 hours to prepare insoluble Li-Al LDH-I.

Thereafter, the lithium ion concentration of the sample filtrate remaining after the preparation of the insoluble Li-Al LDH-I was analyzed by inductively coupled plasma atomic emission spectroscopy (ICP-AES; Optima 7300D, Perkinelmer), and the lithium ion recovery rate was confirmed to be over 99%.

The lithium ion recovery rate was confirmed by using Equation 1 mentioned above.

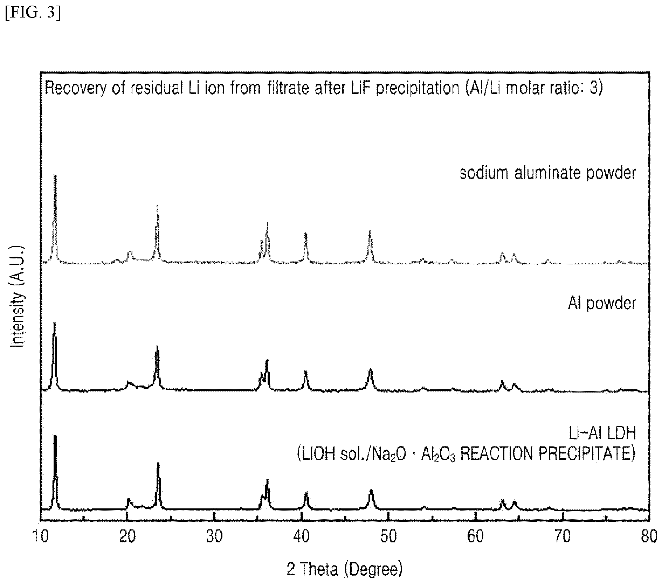

FIG. 3 is a graph showing the results of analyzing the XRD crystal structure of Li-Al LDH according to Embodiment 7.

Referring to FIG. 3, the crystal structure of lithium fluoride prepared in Embodiment 7 was analyzed by using X-ray diffraction analysis (XRD; D/MAX 2200, Rigaku), and the same diffraction angle as that of the Li-Al LDH prepared by reacting the sodium aluminate and lithium hydroxide solution was measured.

### <Embodiment 8> Preparing Li-Al LDH-II from lithium fluoride reaction filtrate

The reaction filtrate with the lithium ion concentration of 120.7 ppm obtained after the preparation of lithium fluoride in Embodiment 6 was reacted with sodium aluminate ($NaAlO_2$) by stirring at a Al:Li molar ratio of 2:1 for 12 hours to prepare insoluble Li-Al LDH-II.

Thereafter, the lithium ion concentration of the sample filtrate remaining after the preparation of the insoluble Li-Al LDH-II was analyzed by inductively coupled plasma atomic emission spectroscopy (ICP-AES; Optima 7300D, Perkinelmer), and the lithium ion concentration of the Li-Al LDH-II reaction filtrate was confirmed to be 5.6 ppm.

The lithium ion recovery rate was confirmed to be about 95% or more.

The lithium ion recovery rate was confirmed by using Equation 1 mentioned above.

### <Embodiment 9> Preparing lithium concentrate by sulfation reaction/water leaching of Li-Al LDH-1

15 g of the Li-Al LDH-I prepared in Embodiment 7 was subjected to a sulfation reaction of sulfate roasting by mixing the Li-Al LDH-I with 30 mL of 1.15 to 4 M sulfuric acid and raising the temperature to 280°C for 30 minutes, followed by maintaining for 2 hours, to prepare a conversion product, and the conversion product and water were water leached at a solid-liquid ratio of 1g/5mL to prepare a lithium concentrate, as shown in Table 6 below.

As a result of the sulfation reaction/water leaching experiment of Li-Al LDH-I, it was confirmed that more than 95% of the contained lithium was recovered when the sulfuric acid concentration was 2 M to 3 M or more.

Further, it was observed that, when the concentration of sulfuric acid was 3 M or more, the aluminum component was converted into aluminum sulfate and leached together with lithium.

Further, it was analyzed that as the concentration of sulfuric acid increased, the amount of the aluminum component, in addition to lithium, increased. In the case of sulfate roasting where the sulfuric acid concentration was 5 M or more, it was confirmed that the reverse reaction that the lithium sulfate and aluminum sulfate formed in the roasting reaction were leached together to form Li-Al LDH-I occurred, or the concentration of Li ions in the solution decreased due to the relatively low content of lithium contained in the conversion product.

Therefore, from the experimental results, it is considered that the roasting conditions of the 2 M sulfuric acid solution are appropriate.

[Table 6]

| Conditions | Conditions for sulfate roasting | | Conditions for water leaching | | Concentration (mg/L, ppm) | |
|---|---|---|---|---|---|---|
| | Weight (g) of Li-Al LDH-I | Volume (mL) of $H_2SO_4$ | Conversion product (g) by sulfate roasting | Water (mL) | Li | Al |
| 1.15 M $H_2SO_4$ | 15 | 30 | 1 | 5 | 4,241 | N.D. |
| 2 M $H_2SO_4$ | | | | | 5,161 | N.D. |
| 3 M $H_2SO_4$ | | | | | 5,047 | 435 |
| 4 M $H_2SO_4$ | | | | | 3,876 | 3,407 |

**<Embodiment 10> Preparing lithium concentrate by sulfation reaction/acid leaching of Li-Al LDH-1**

10 g of the Li-Al LDH-I prepared in Embodiment 7 was mixed with 150 mL of 1 to 3 M sulfuric acid, and then subjected to a sulfation reaction and acid leaching for 6 hours to prepare a lithium concentrate, as shown in Table 7 below.

As a result of the sulfation reaction/acid leaching experiment of Li-Al LDH-I, when the concentration of sulfuric acid was 1 M or more, the concentration of Li ions was leached to be more than 1,000 ppm. It is considered that, as the concentration of sulfuric acid increases, the concentration of Al ions increases, and, thus, a sulfuric acid concentration of 1 M or less is appropriate.

It was confirmed that a lithium concentrate might be converted into a lithium concentrate of more than 3,000 ppm by adjusting the leaching solid (Li-Al-LDH,g)/liquid (acid solution, mL) ratio.

[Table 7]

| | | | Concentration (mg/L, ppm) | |
|---|---|---|---|---|
| Conditions | Weight (g) of Li-Al LDH-I | Volume (mL) of $H_2SO_4$ | Li | Al |
| 1 M $H_2SO_4$ | 10 | 150 | 1,620 | 14,000 |
| 2 M $H_2SO_4$ | | | 1,650 | 14,280 |
| 3 M $H_2SO_4$ | | | 1,590 | 14,443 |

**<Embodiment 11> Subjecting reaction filtrate to mechanical vapor recompression (MVR) to additionally precipitate lithium fluoride and separate remaining process water - I**

The crystal structure of the precipitate precipitated by using mechanical vapor recompression (MVR) to the reaction filtrate remaining after the preparation of the lithium fluoride in Embodiment 4 was analyzed by using X-ray diffraction analysis (XRD; D/MAX 2200, Rigaku), and the same diffraction angle as that of reagent grade lithium fluoride (LiF) was measured.

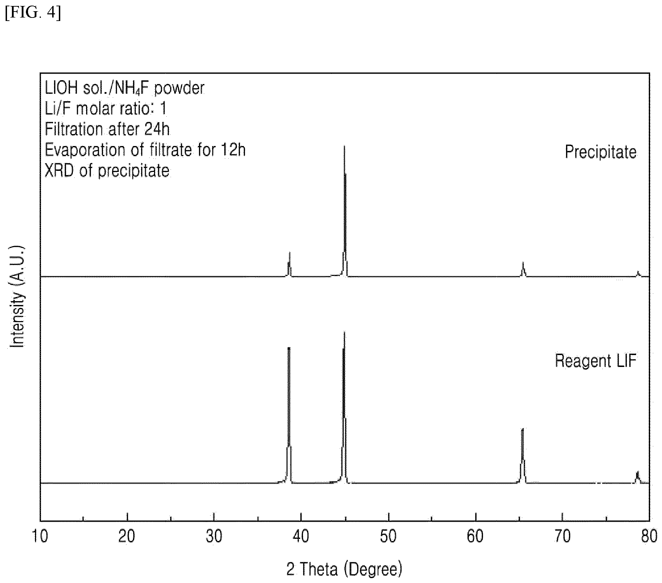

FIG. 4 is a graph showing the results of analyzing the XRD crystal structure of lithium fluoride formed after the use of the MVR process to the reaction filtrate remaining after the preparation of the lithium fluoride according to Embodiment 11.

Referring to FIG. 4, the precipitate obtained by the separation of the filtrate and mechanical vapor recompression was analyzed, and the composition thereof showed similar to that of the LiF reagent.

**<Embodiment 12> Removaing fluoride ions by applying calcium hydroxide to fluoride sludge according to calcium/fluorine reaction ratio**

A solution of hydrofluoric acid and ammonium fluoride with a fluorine concentration of about 2 wt% or 6 wt% was prepared and then reacted for 24 hours by using calcium hydroxide ($Ca(OH)_2$), which is a conventional fluoride ion removal method, and the fluoride ion concentration of the remaining process water was analyzed by using ion chromatography (Metrohm, 881 Compact IC pro(Anion)).

Referring to Table 8 below, fluoride sludge with a fluoride ion concentration of about 2 wt% was reacted with calcium hydroxide at a $Ca/F_2$ molar ratio of 1 to 2, and, when the $Ca/F_2$ molar ratio was 1.5 or more, the fluorine concentration of 500 ppm or less was observed. It is considered that, even if the $Ca/F_2$ ratio is increased in the general $CaF_2$ precipitation reaction, it is difficult to remove fluoride ions below a certain concentration from a high-concentration fluoride solution.

[Table 8]

| Conditions (HF, NH4F sol. 50mL. 24h, 400RPM) | By equivalent ratio ($Ca/F_2$) | F- conc. (ppm) |
|---|---|---|
| HF sol. (F-conc. 2%, 50mL)+ $Ca(OH)_2$ | 1 | 561.682 |
| | 1.5 | 488.477 |
| | 2 | 492.470 |
| $NH_4F$ sol. (F-conc. 2%, 50mL)+$Ca(OH)_2$ | 1 | 529.738 |
| | 1.5 | 499.125 |
| | 2 | 479.160 |

Referring to Table 9 below, after reacting the high-concentration fluoride sludge (F-conc. > 6%) with calcium hydroxide at a $Ca/F_2$ equivalent ratio of 1, a fluorine concentration of 500 ppm or less was observed, and it was confirmed that the ammonium fluoride solution had a higher fluoride ion removal rate than hydrofluoric acid.

[Table 9]

| Conditions (HF, $NH_4F$ sol. 50mL. 24h, 400RPM) | Equivalent ratio ($Ca/F_2$) | Reaction time (h) | F conc. (ppm) |
|---|---|---|---|
| HF sol. (F-conc. 2%, 50mL)+ $Ca(OH)_2$ | 1 | 24 | 561.682 |
| HF sol. (F-conc. 6%, 50mL)+ $Ca(OH)_2$ | | | 496.463 |
| $NH_4F$ sol. (F-conc. 2%, 50mL)+$Ca(OH)_2$ | | | 529.738 |
| $NH_4F$ sol. (F-conc. 6%, 50mL)+$Ca(OH)_2$ | | | 447.216 |

**<Embodiment 13> Reacting the reaction filtrate remaining after preparation of lithium fluoride and Li-Al LDH-II with calcium hydroxide to precipitate calcium fluoride and separate remaining process water - II**

The reaction filtrate remaining after the preparation of the lithium fluoride (LiF) and Li-Al LDH-II in Embodiments 6 and 8 was reacted with calcium hydroxide ($Ca(OH)_2$) at a $Ca/F_2$ equivalent ratio of 1 to prepare calcium fluoride, and the fluoride ion concentration of the remaining process water was analyzed by using ion chromatography (Metrohm, 881 Compact IC pro(Anion)).

After reacting the filtrate remaining after the preparation of the lithium fluoride (LiF) and Li-Al LDH-II with calcium hydroxide at a $Ca/F_2$ equivalent ratio of 1, the fluorine concentration of the discharged solution was confirmed to decrease from about 435.5 ppm to 24.8 ppm.

Embodiments about a method for recovery of high value-added resources from lithium sludge and fluoride sludge according to the present disclosure were described above, but it is apparent that various modifications may be achieved without departing from the scope of the present disclosure.

Therefore, the scope of the present disclosure should not be limited to the embodiment(s) and should be determined by not only the following claims, but equivalents of the claims.

That is, it should be understood that the embodiments described above are not limitative, but only examples in all respects, the scope of the present disclosure is expressed by claims described below, not the detailed description, and it should be construed that all of changes and modifications achieved from the meanings and scope of claims and equivalent concept are included in the scope of the present disclosure.

[Industrial Applicability]

The present disclosure can be used in a method for recovery of high value-added resources from lithium sludge generated in the process of manufacturing lithium secondary batteries or recycling the lithium secondary batteries after use, and from fluoride sludge generated in the process of manufacturing semiconductors.

**Claims**

1. A method for recovery of high value-added resources from lithium sludge and fluoride sludge, comprising:

    (a-1) adding fluoride sludge, which is a precipitant, to lithium sludge, followed by precipitation and separation, to prepare lithium fluoride (LiF), which is an insoluble lithium compound;
    (a-2) reacting the reaction filtrate remaining after the preparation of the lithium fluoride, which is an insoluble lithium compound, with an aluminum compound to prepare Li-Al layered double hydroxide (LDH), which is an insoluble lithium compound;
    (a-3) subjecting the Li-Al layered double hydroxide (LDH), which is an insoluble lithium compound, to a sulfation reaction with a sulfuric acid compound to prepare a conversion product;
    (a-4) water leaching the lithium contained in the conversion product to prepare a lithium concentrate;
    (a-5) recirculating the lithium concentrate as a lithium raw material in the step of (a) preparing the lithium fluoride (LiF);
    (a-6) reacting the filtrate remaining after the preparation of the Li-Al layered double hydroxide (LDH), which is an insoluble lithium compound, with a calcium compound to separate the filtrate into a calcium fluoride precipitate and residual process water.

2. A method for recovery of high value-added resources from lithium sludge and fluoride sludge of claim 1, comprising:

    (b-1) adding fluoride sludge, which is a precipitant, to the lithium sludge, followed by precipitation and separation, to prepare lithium fluoride (LiF), which is an insoluble lithium compound;
    (b-2) subjecting the reaction filtrate remaining after the preparation of the lithium fluoride (LiF), which is an insoluble lithium compound, to mechanical vapor recompression (MVR) to additionally precipitate and separate lithium fluoride (LiF), and separating a concentrate containing trace amounts of lithium, fluorine and other cations and anions; and
    (b-3) reacting the concentrate containing trace amounts of lithium, fluorine and other cations and anions with a calcium compound to separate the concentrate into a calcium fluoride precipitate and residual process water.

3. The method for recovery of high value-added resources from lithium sludge and fluoride sludge of claim 1 or 2, wherein the lithium sludge is lithium sludge generated in the processes of manufacturing lithium secondary batteries and recycling waste lithium secondary batteries, and
   the fluoride sludge is fluoride sludge generated in the semiconductor and display industries.

4. The method for recovery of high value-added resources from lithium sludge and fluoride sludge of claim 1 or 2, wherein the lithium sludge comprises at least one selected from the group consisting of lithium hydroxide, lithium carbonate, lithium sulfate, lithium phosphate and lithium chloride, and
   the form of the lithium sludge comprises a solution or a slurry.

5. The method for recovery of high value-added resources from lithium sludge and fluoride sludge of claim 1 or 2, wherein the fluoride sludge comprises at least one selected from the group consisting of sodium fluoride (NaF), ammonium fluoride ($NH_4F$), potassium fluoride (KF), ferrous fluoride ($FeF_2$), ferric fluoride ($FeF_3$), aluminum fluoride ($AlF_3$) and hydrogen fluoride (HF), and
   the form of the fluoride sludge comprises a solution or a slurry.

6. The method for recovery of high value-added resources from lithium sludge and fluoride sludge of claim 1 or 2, wherein the lithium sludge has a lithium ion concentration of 200 ppm to 5,000 ppm.

7. The method for recovery of high value-added resources from lithium sludge and fluoride sludge of claim 1 or 2, wherein the fluoride sludge has a fluorine ion concentration of 500 ppm to 150,000 ppm.

8. The method for recovery of high value-added resources from lithium sludge and fluoride sludge of claim 1 or 2, wherein the content ratio of lithium (Li) in the lithium sludge and fluorine (F) in the fluoride sludge is a molar ratio of Li:F of 1:0.1 to 1:10.

9. The method for recovery of high value-added resources from lithium sludge and fluoride sludge of claim 1, wherein the aluminum compound is at least one selected from the group consisting of aluminum chloride, sodium aluminate, aluminum powder, aluminum hydroxide, aluminum sulfate and alumina.

10. The method for recovery of high value-added resources from lithium sludge and fluoride sludge of claim 1 or 2, wherein the concentration of fluorine ions contained in the remaining process water after the precipitation of calcium fluoride is 100 ppm or less.

11. The method for recovery of high value-added resources from lithium sludge and fluoride sludge of claim 1 or 2, wherein the remaining process water is recovered and used to adjust a pH for water treatment.

12. The method for recovery of high value-added resources from lithium sludge and fluoride sludge of claim 1, wherein the lithium concentrate comprises lithium (Li) ions, sulfuric acid ($SO_4$) ions or metal (M) ions as ionic components.

13. The method for recovery of high value-added resources from lithium sludge and fluoride sludge of claim 1, wherein the sulfuric acid compound is at least one selected from the group consisting of:
sulfuric acid ($H_2SO_4$), sulfurous acid ($H_2SO_3$), hyposulphite ($H_2SO_2$), magnesium sulfate ($MgSO_4$), magnesium sulfite ($MgSO_3$), magnesium hyposulfite ($MgSO_2$), calcium sulfate ($CaSO_4$), calcium sulfite ($CaSO_3$), calcium hyposulfite ($CaSO_2$), sodium sulfate ($Na_2SO_4$), sodium sulfite ($Na_2SO_3$), sodium hyposulfite ($Na_2SO_2$), potassium sulfate ($K_2SO_4$), potassium sulfite ($K_2SO_3$), potassium hyposulfite ($K_2SO_2$), ferrous sulfate ($FeSO_4$), ferrous sulfite ($FeSO_3$), ferrous hyposulfite ($FeSO_2$), ferric sulfate ($Fe_2(SO_4)_3$), ferric sulfate ($Fe_2(SO_3)_3$), ferric hyposulfite ($Fe_2(SO_2)_3$), ammonium sulfate (($NH_4)_2SO_4$), sulfuric acid Aluminum ($Al_2(SO_4)_3$), aluminum sulfite ($Al_2(SO_3)_3$) and aluminum hyposulfite ($Al_2(SO_2)_3$).

14. The method for recovery of high value-added resources from lithium sludge and fluoride sludge of claim 1, wherein the reaction temperature during the sulfation reaction between the Li-Al layered double hydroxide (LDH) and the sulfur acid compound is 200°C to 1,000°C.

15. The method for recovery of high value-added resources from lithium sludge and fluoride sludge of claim 1, wherein the reaction time for the sulfation reaction between the Li-Al layered double hydroxide (LDH) and the sulfuric acid compound is 0.5 to 36 hours.

16. The method for recovery of high value-added resources from lithium sludge and fluoride sludge of claim 1, wherein the solid/liquid ratio (solid/liquid, g/L) of the conversion product and water during the water leaching is 30 g/L to 2,000 g/L.

[FIG. 1]

[FIG. 2]

[FIG. 3]

Recovery of residual Li ion from filtrate after LiF precipitation (Al/Li molar ratio: 3)

sodium aluminate powder

Al powder

Li-Al LDH
(LIOH sol./Na₂O · Al₂O₃ REACTION PRECIPITATE)

[FIG. 4]

# EP 4 368 574 A1

<table>
<tr><td colspan="2" style="text-align:center"><strong>INTERNATIONAL SEARCH REPORT</strong></td><td colspan="2">International application No.<br><br><strong>PCT/KR2022/009621</strong></td></tr>
</table>

**A. CLASSIFICATION OF SUBJECT MATTER**

**C01D 15/04**(2006.01)i; **C01D 3/02**(2006.01)i; **H01M 10/54**(2006.01)i

According to International Patent Classification (IPC) or to both national classification and IPC

**B. FIELDS SEARCHED**

Minimum documentation searched (classification system followed by classification symbols)

C01D 15/04(2006.01); C01B 25/30(2006.01); C01D 15/00(2006.01); C01D 15/06(2006.01); C01D 3/02(2006.01); C01F 7/04(2006.01); C01G 53/00(2006.01); C22B 26/12(2006.01); C22B 7/00(2006.01); H01M 10/54(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 폐액(lithium waste liquid), 불화물(fluoride), 불화리튬(LiF), 알루미늄 (aluminium), Li-Al 층상이중수산화물(Li-Al layered double hydroxide), 가열농축(mechanical vapor recompression)

**C. DOCUMENTS CONSIDERED TO BE RELEVANT**

| Category* | Citation of document, with indication, where appropriate, of the relevant passages | Relevant to claim No. |
|---|---|---|
| A | KR 10-2242686 B1 (KOREA INSTITUTE OF GEOSCIENCE AND MINERAL RESOURCES(KIGAM)) 21 April 2021 (2021-04-21)<br>See paragraphs [0004]-[0007]; and claims 1, 2, 13 and 14. | 1-16 |
| A | KR 10-2019-0079988 A (TOWN MINING RESOURCE CO., LTD.) 08 July 2019 (2019-07-08)<br>See entire document. | 1-16 |
| A | KR 10-2033607 B1 (SEHWA VL et al.) 17 October 2019 (2019-10-17)<br>See entire document. | 1-16 |
| A | KR 10-2020-0123659 A (COSMO ECOCHEM CO., LTD.) 30 October 2020 (2020-10-30)<br>See entire document. | 1-16 |
| A | JP 2014-156648 A (JX NIPPON MINING & METALS CORP.) 28 August 2014 (2014-08-28)<br>See entire document. | 1-16 |

☑ Further documents are listed in the continuation of Box C.    ☑ See patent family annex.

| | |
|---|---|
| \*   Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **21 October 2022** | **24 October 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2022/009621** |

### C.    DOCUMENTS CONSIDERED TO BE RELEVANT

| Category* | Citation of document, with indication, where appropriate, of the relevant passages | Relevant to claim No. |
| --- | --- | --- |
| PX | KR 10-2378751 B1 (KOREA INSTITUTE OF GEOSCIENCE AND MINERAL RESOURCES(KIGAM)) 25 March 2022 (2022-03-25)<br>  See claims 1-16.<br>  (*This document is the published patent of a priority application of the present international application.) | 1-16 |

Form PCT/ISA/210 (second sheet) (July 2022)

**INTERNATIONAL SEARCH REPORT**
Information on patent family members

International application No.

**PCT/KR2022/009621**

| Patent document cited in search report | | | Publication date (day/month/year) | Patent family member(s) | | | Publication date (day/month/year) |
|---|---|---|---|---|---|---|---|
| KR | 10-2242686 | B1 | 21 April 2021 | None | | | |
| KR | 10-2019-0079988 | A | 08 July 2019 | KR | 10-2016817 | B1 | 02 September 2019 |
| KR | 10-2033607 | B1 | 17 October 2019 | None | | | |
| KR | 10-2020-0123659 | A | 30 October 2020 | KR | 10-2206952 | B1 | 25 January 2021 |
| JP | 2014-156648 | A | 28 August 2014 | JP | 5847741 | B2 | 27 January 2016 |
| KR | 10-2378751 | B1 | 25 March 2022 | None | | | |

Form PCT/ISA/210 (patent family annex) (July 2022)